# EUROPÄISCHE PATENTSCHRIFT

(11) **EP 1 520 007 B1**
(45) Veröffentlichungstag und Bekanntmachung des Hinweises auf die Patenterteilung: **29.03.2006**
(21) Anmeldenummer: 03732571.9
(22) Anmeldetag: 13.06.2003
(51) Int. Cl.: C12H 1/044, A23L 2/72

(54) **VERWENDUNG KOLLOIDALER ANIONISCHER KIESELSOLE ALS KLÄRUNGSMITTEL**
USE OF COLLOIDAL ANIONIC SILICA SOLS AS CLARIFYING AGENTS
UTILISATION DE SOLS DE SILICE ANIONIQUE COLLOIDALE COMME AGENTS DE CLARIFICATION

(30) Priorität: 28.06.2002 DE 10229047
(43) Veröffentlichungstag der Anmeldung: 06.04.2005
(73) Patentinhaber: AZ Electronic Materials USA Corp., Somerville, NJ 08876 (US)
(72) Erfinder: FALK, Uwe, 63486 Bruchköbel (DE); JACQUINOT, Eric, F-60350 Trosly Breuil (FR); PERARD, Marie, Laure, F-60200 Compiegne (FR)
(74) Vertreter: Isenbruck, Günter
(86) Internationale Anmeldenummer: PCT/EP2003/006264
(87) Internationale Veröffentlichungsnummer: WO 2004/003128

(56) Entgegenhaltungen:
- DE-A- 1 642 769
- DE-A- 2 133 906
- DE-A- 2 408 896
- DE-A- 3 015 439
- DE-A- 3 231 240
- DE-C- 19 707 332

## Beschreibung

Die vorliegende Erfindung betrifft die Verwendung kolloidaler, anionischer Kieselsole mit saurem pH zur Klärung und Stabilisierung flüssiger Lebensmittel.

Flüssige Lebensmittel wie Fruchtsäfte, Biere und Weine fallen in der Regel bei ihrer Herstellung in trüber Form an. Die Trübung besteht aus den durch Filtration nicht entfernten Bestandteilen der Pflanzen, aus denen die Lebensmittel gewonnen wurden, oder, wie im Fall von Bier, aus Hefe.

Der Verbraucher schätzt diese Trübung nur in Ausnahmefällen. Im allgemeinen wünscht er ein klares Produkt. Besonders problematisch ist die Erzeugung eines klaren Bieres. Bier kann, selbst wenn es klar hergestellt wurde, bei der Lagerung eintrüben.

DE-A-16 42 769 offenbart, dass feinteilige, gefällte Kieselsole Im Bier eine stabilisierende Wirkung ausüben, die im wesentlichen durch eine selektive Adsorption von hochmolekularen Eiweißstoffen, die für die Trübungsbildung mit verantwortlich sind, erklärt werden kann. Weiter ist bekannt, Polyvinylpyrrolidon zur Bier-Stabilisierung zu verwenden, wobei die Wirkung durch Adsorption von polyphenolischen Komponenten (Tannin und Anthocyanogen) erfolgt. DE-A-16 42 769 offenbart ein Mittel zur Bierklärung, das aus einem polymerorganisch modifizierten mit Säuren in Gegenwart wasseriösticnen Polyvinylpyrrolidons oder dessen Derivate oder Mischpolymeren aus Silikatlösungen gefällten Kieselsol besteht. Als polymerorganische Komponente eignen sich außer dem obengenannten Polyvinylpyrrolidon z.B. Polyvinyl-3-methylpyrrolidon und die entsprechenden Mischpolymeren mit Vinylacetat.

US-3 617 301 offenbart ein Verfahren zur Klärung von Bier, welches die Zugabe von Hydrogelen mit einer Oberfläche von mindestens 700 m²/g und einem mittleren Porendurchmesser von 3 bis 12 nm zum Bier, und deren anschließende Abtrennung umfaßt.

US-3 878 300 offenbart ein Verfahren zur Klärung von Bier, welches die Zugabe von 50 bis 500 ppm eines Kieselsäure-Hydrosols umfaßt. Das Hydrosol wird durch Alterung und lonenaustausch erzeugt.

DE-A-2408896 offenbart kolloidale, anionische Kieselsole mit einem Teilchendurchmener zwischen 4 und 150 nm und einer Oberfläche zwischen 20 und 700 m²/g.

Ausgehend vom Stand der Technik bestand die Aufgabe vorliegender Erfindung darin, die bekannten Verfahren zur Klärung und Stabilisierung flüssiger Lebensmittel zu verbessern. Ferner sollte das zur Klärung verwendete Produkt leicht handhabbar sein.

Überraschenderweise wurde nun gefunden, dass kolloidale, anionische Kieselsole mit saurem pH ausgezeichnete Mittel zur Klärung und Stabilisierung flüssiger Lebensmittel sind.

Gegenstand der Erfindung ist somit die Verwendung kolloidaler, anionischer Kleselsole mit einem pH von 1 bis 4, einem Teilchendurchmesser von 4 bis 150 nm und einer Oberfläche von 20 bis 700 m²/g zur Klärung und Stabilisierung von flüssigen Lebensmitteln.

Ein weiterer Gegenstand der Erfindung ist ein Verfahren zur Klärung und Stabilisierung flüssiger Lebensmittel, indem man dem getrübten oder zur Eintrübung neigenden flüssigen Lebensmittel eine zur Klärung ausreichende Menge eines wie vorstehend definierten Kieselsols zusetzt, und diess nach der Klärung wieder abtrennt.

Im erfindungsgemäßen Verfahren werden vorzugsweise wäßrige Suspensionen kolloidaler, anionischer Kieselsole mit einem Kieselsolgehalt von mehr als 5 Gew.-%, insbesondere 10 % verwendet

Bevorzugte Teilchendurchmesser der Kieselsole liegen zwischen 6 und 50 nm, insbesondere 8 bis 35 nm.

Der pH der kolloidalen anionischen Kieselsole liegt vorzugsweise zwischen 2 und 4.

Die Teilchen der Suspensionen von kolloidalen anionischen Kieselsolen mit saurem pH-Wert sind vorzugsweise individualisierte Teilchen von kolloidalen Kieselsolen, die nicht durch Siloxanbindungen aneinander gebunden sind. Unter Siloxanbindungen werden hier Si-O-Si-Bindungen verstanden.

Die Oberfläche der kolloidalen anionischen Kieselsole liegt vorzugsweise zwischen 60 und 500 m²/g.

Däs kolloidale anionische Kieselsol mit saurem pH kann beispielsweise dadurch hergestellt werden, dass man eines entsprechendes Kieselsol mit einem basischen pH über einem Kationenaustauscherharz von Kationen befreit. Man erhält dann sofort eines kolloidales anionisches saures Kieselsol.

Bei den flüssigen Lebensmitteln, die erfindungsgemäß geklärt und stabilisiert werden können, handelt es sich beispielsweise um Fruchtsaft, Bier oder Wein.

Die vorliegende Erfindung betrifft ganz besonders bevorzugt ein Verfahren zur Klärung und Stabilisierung des gegärten und nicht filtrierten Bieres, wobei man einem gegärten und nicht filtrierten Bier eine wässrige Suspension von kolloidalem Kleselsoles mit einem sauren pH-Wert zugibt, so wie es oben definiert wurde, und wobei man eine Flockung erfolgen läßt, und anschließend die gebildete Ablagerung abtrennt, so dass ein klares Bier von guter Stabilität mit einem dem nicht geklärten Bier Identischen Natriumgehalt erhalten wird.

In einer weiteren bevorzugten Ausführungsform wird die Klärung und Stabilisierung von flüssigen Lebensmitteln im erfindungsgemäßen Verfahren dergestalt durchgeführt, dass außer dem kieselsol noch Polyvinylpyrrolidon, vorzugsweise in Pulverform, zugegeben wird. Polyvinylpyrrolidon eignet sich besonders gut zur Abtrennung von Polyphenolen.

Zur Klärung und Stabilisierung von flüssigen Lebensmitteln werden dem ungeklärten Lebensmittel vorzugsweise 5 bis 500 g/Hektoliter, insbesondere 20 bis 100 g und speziell 25 bis 100 g/Hektoliter des Kieselsols zugesetzt.

### Beispiele

In den Beispielen wurde ein kolloidales, anionisches saures Kieselsol verwendet, das unter dem Namen Klebosol® (Clariant France) erhältlich ist. Es ist wie folgt charakterisiert:

| | |
|---|---|
| Gehalt an SiO₂: | 10 Gew.-% |
| Gehalt an Na₂O: | 0,02 Gew.-% |
| spezifische Oberfläche: | 280 m²/g |
| mittlerer Teilchendurchmesser: | 9 nm |
| pH (20°C): | 3 |
| Dichte (20°C): | 1,058 g/cm³ |

Es wurden 50 g/hl saures Klebosol beim Schlauchen in den Lagertank dem Bier zudosiert. Nach einer Lagerzeit von sechs Wochen wurde das Bier über einen Kombischichtenfilter filtriert. Parallel zu diesem erfindungsgemäßen Beispiel wurde als Vergleichsbeispiel ein weiteres, nach denselben Produktionsparametem und aus derselben Malzcharge hergestelltes Bier untersucht. Diesem Bier wurde während der Filtration 60 g/hl Xerogel zugegeben. Beide Biere wurden ferner mit 20 g/hl PVPP stabilisiert.

Während der Filtration konnten keine Unterschiede bezüglich Druckanstieg oder Trübung erkannt werden. Die Analysendaten der filtrierten und unfiltrierten Biere zeigt Tabelle 1.

Die Schaumhaltbarkeit wurde nach Ross & Clark bestimmt:
Durch die Einleitung von CO₂ wird ein bestimmtes Schaumvolumen erzeugt. Als Maß für die Schaumhaltbarkeit dient die mittlere Lebensdauer der Schaumblasen, die aus dem Verhältnis zwischen der Zerfallszeit des Schaumes und dem Logarithmus des Verhältnisses zwischen dem Volumen des zerfallenen und des noch vorhandenen Schaumes ermittelt wird.

**Tabelle 1: Analysendaten der Versuchsfiltration**

| Analysen | Vergleichsbeispiel | | erfindungsgemäßes Beispiel | |
|---|---|---|---|---|
| | Unfiltrat | Filtrat | Unfiltrat+Klebosol | Filtrat+Klebosol |
| Stammwürze Gew.-% | 11,95 | 12,0 | 11,95 | 11,82 |
| Alkohol Vol.-% | 5,35 | 5,40 | 5,40 | 5,35 |
| Ausstoß-Vergärungsgrad scheinbar % | 86 | 86 | 86 | 86 |
| pH-Wert | 4,35 | 4,42 | 4,35 | 4,36 |
| Schaum n. Ross & Clark | 111 | 107 | 116 | 110 |
| Natrium mg/l | 11,8 | 12,5 | 14,5 | 14,2 |
| Tannoide mg/l | 43 | 19 | 50 | 16 |
| Gesamtpolyphenole mg/l | 186 | 165 | 198 | 165 |
| mit MgSO₄ fällbarer Stickstoff, mg/100 ml | 16,8 | 16,1 | 17,3 | 16,5 |
| Gesamtsauerstoff mg/l | | 0,1 | | 0,1 |

Unter einem Unfiltrat wird hier ein Bier vor der Filtration verstanden.

Es lassen sich Unterschiede bei Schaum, Natriumgehalt, Tannoiden, Gesamtpolyphenolen, mit MgSO₄ fällbarem Stickstoff, und den Warmtagen erkennen, während die restlichen Werte nahezu identisch sind.

Die Schaumpunkte des erfindungsgemäß behandelten Bieres sind sowohl im Unfiltrat als auch im Filtrat gegenüber dem Vergleichsbeispiel verbessert. Die Mengen des mit MgSO₄ fällbaren Stickstoffs sind gering höher als im Vergleichsbeispiel. Der Natriumgehalt des erfindungsgemäß behandelten Bieres steigt um etwa 2 mg/l an. Die Tannoidmenge des erfindungsgemäß gewonnenen Unfiltrats ist zum Vergleichsunfiltrat leicht erhöht. Im Filtrat sind dagegen keine Unterschiede zu erkennen. Ähnlich verhält es sich mit den Mengen der Gesamtpolyphenole.

In einem weiteren Versuch wurden die Warmtage im Forciertest bestimmt. Es handelt sich dabei um eine Messung der Trübungsintensität in Abhängigkeit von der Zeit. Es wird zunächst eine Messung der Trübung bei Raumtemperatur durchgeführt. Dann wird die Probe für 24 Stunden bei 40°C gelagert, anschließend für 24 Stunden bei 0°C. Danach wird emeut die Trübung bestimmt. Ein Zyklus von Lagerung bei 40°C und Lagerung bei 0°C wird als 1 Warmtag bezeichnet. Der Zyklus wird so lange wiederholt, bis die Trübung 2,5 Einheiten nach der European Brewery Convention (EBC) überschritten hat.

Hier wurden 3 Biere untersucht. Neben den bereits oben genannten Bieren, die einmal mit Xerogel und einmal mit saurem Klebosol behandelt waren, wurde hier zu Vergleichszwecken ein Bier untersucht, das mit neutralem Klebosol (pH ≈7) behandelt war. In Tabelle 2 sind die Ergebnisse wiedergegeben.

**Tabelle 2: Trübung in Abhängigkeit von der Lagerzeit bei 40°C**

| Lagerzeit/Warmtage | Trübung / European Brewery Convention | | |
|---|---|---|---|
| | Biere mit saurem Klebosol (erf.) | Bier mit Xerogel (Vergleich) | Bier mit neutralem Klebosol (Vergleich) |
| 0 | 0,4 | 0,4 | 0,4 |
| 2 | 0,4 | 0,5 | 0,7 |
| 5 | 0,4 | 0,6 | 1,1 |
| 7 | 0.4 | 0,7 | 1.8 |
| 10 | 1,0 | 1,7 | 2,6 |
| 12 | 1,5 | 2,7 | n.b. |
| 15 | 2,0 | n.b. | n.b. |

Während das mit saurem Klebosol behandelte Bier noch nach 15 Tagen eine akzeptable Trübung aufweist, war beim Xerogel-behandelten Bier nach 15 Tagen und beim neutral-Klebosol-behandelten Bier bereits nach 12 Tagen die Trübung so intensiv, dass sie die Meßgrenze überschritten hat.

## Patentansprüche

1. Verwendung kolloidaler, anionischer Kieselsole mit einem pH von 1 bis 4, einem Teilchendurchmesser von 4 bis 150 nm und einer Oberfläche von 20 bis 700 m²/g zur Klärung und Stabilisierung von flüssigen Lebensmitteln.

2. Verwendung gemäß Anspruch 1. wobei eine wäßrige Suspension von kolloidalen anionischen Kieselsolen mit einem Kieselsolgehalt von mehr als 5 Gew.-% verwendet wird.

3. Verwendung gemäß Anspruch 1 und/oder 2, wobei der Teilchendurchmesser der verwendeten Kieselsole zwischen 6 und 50 nm liegt.

4. Verwendung gemäß einem oder mehreren der Ansprüche 1 bis 3, wobei der pH der verwendeten Kieselsole zwischen 2 und 4 liegt

5. Verwendung gemäß einem oder mehreren der Ansprüche 1 bis 4, wobei die Oberfläche der verwendeten Kieselsole zwischen 60 und 500 m²/g liegt.

6. Verwendung gemäß einem oder mehreren der Ansprüche 1 bis 5, wobei das flüssige Lebensmittel Fruchtsaft, Bier oder Wein ist.

7. Verwendung gemäß einem oder mehreren der Ansprüche 1 bis 6, wobei dem Kieselsol ein Polyvinylpyrrolidon zugesetzt wird.

8. Verwendung gemäß einem oder mehreren der Ansprüche 1 bis 7, wobei die Menge der zugesetzten Kleselsble 5 bis 500 g/Hektoliter beträgt

## Claims

1. The use of colloidal, anionic silica sols of a pH of 1 to 4, a particle diameter of 4 to 150 nm and a surface area of 20 to 700 m²/g for clarifying and stabilizing liquid foods.

2. The use as claimed in claim 1, wherein use is made of an aqueous suspension of colloidal anionic silica sols of a silica sol content of more than 5% by weight.

3. The use as claimed in claim 1 and/or 2, wherein the particle diameter of the silica sols used is between 6 and 50 nm.

4. The use as claimed in one or more of claims 1 to 3, wherein the pH of the silica sols used is between 2 and 4.

5. The use as claimed in one or more of claims 1 to 4, wherein the surface area of the silica sols used is between 60 and 500 m²/g.

6. The use as claimed in one or more of claims 1 to 5, wherein the liquid food is fruit juice, beer or wine.

7. The use as claimed in one or more of claims 1 to 6, wherein a polyvinylpyrrolidone is added to the silica sol.

8. The use as claimed in one or more of claims 1 to 7, wherein the amount of added silica sols is 5 to 500 g/hectoliter.

## Revendications

1. Utilisation de sols de silice anioniques colloïdaux présentant un pH de 1 à 4, un diamètre de particules de 4 à 150 nm et une surface spécifique de 20 à 700 m²/g.

2. Utilisation selon la revendication 1, en utilisant une suspension aqueuse de sols de silice anioniques colloïdaux présentant une teneur en sol de silice de plus de 5% en poids.

3. Utilisation selon la revendication 1 et/ou 2, le diamètre de particules de sols de silice utilisés étant compris entre 6 et 50 nm.

4. Utilisation selon l'une ou plusieurs des revendications 1 à 3, le pH des sols de silice utilisés étant compris entre 2 et 4.

5. Utilisation selon l'une ou plusieurs des revendications 1 à 4, la surface spécifique des sols de silice utilisés étant comprise entre 60 et 500 m²/g.

6. Utilisation selon l'une ou plusieurs des revendications 1 à 5, le produit alimentaire étant du jus de fruit, de la bière ou du vin.

7. Utilisation selon l'une ou plusieurs des revendications 1 à 6, une polyvinylpyrrolidone étant ajoutée au sol de silice.

8. Utilisation selon l'une ou plusieurs des revendications 1 à 7, la quantité des sols de silice ajoutés étant de 5 à 500g/hectolitre.
